# EUROPEAN PATENT APPLICATION

(11) **EP 3 025 592 A1**
(43) Date of publication of application: **01.06.2016**
(21) Application number: 14192859.8
(22) Date of filing: 12.11.2014
(51) Int. Cl.: A23L 13/00, A23L 13/40, A23L 13/60, A23L 5/00, A22C 17/00, A23P 30/10

(54) **Method for preparing a meat-based food**

(71) Applicant: Teknolook S.r.l., 10090 Rivoli (Torino) (IT)
(72) Inventor: Ramella, Roberto, I-10093 COLLEGNO (Torino) (IT); Cancedda, Davide, I-10048 VINOVO (Torino) (IT); Coppola, Salvatore, I-20017 RHO (Milano) (IT)
(74) Representative: Rondano, Davide

(57) **Abstract**

Method for preparing a meat-based food is disclosed, which comprises the steps of providing a mixture containing meat along with at least one ingredient chosen from water, salt and spices, and introducing the mixture into a mould (22) suitably shaped so as to obtain a meat block (10) of elongated shape along a longitudinal axis (x), with axially opposite first and second faces (12, 14) and with a lateral surface (16), wherein the meat block (10) has a central through hole (18), the axis of which coincides with the longitudinal axis (x), and a plurality of radial and/or transverse cavities (20), which open outwards and are distributed over the entire lateral surface (16) to put the inner part of the meat block (10) into communication with the outside.

## Description

The present invention relates to a method for preparing a meat-based food, in particular a kebab-type food, designed to be cooked, while being rotated about a longitudinal axis, by means of the heat generated by a fixed heat source.

The invention has been conceived by the Applicant in an attempt to solve the problem of cooking a food of the abovementioned type in a relatively short time (in particular, no longer than one hour) as uniformly as possible, that is, without significant differences in the degree of cooking between the outermost part and the innermost part of the food. When cooking a kebab-type food, in other words a food basically consisting of a block of meat designed to be rotated about the longitudinal axis thereof while being heated by a fixed heat source, either there is the risk that the outermost layer of the food gets burnt in an attempt to cook said food right the way through, or, conversely, there is the risk that the food does not get cooked properly all the way through in an attempt to avoid burning the outermost layer thereof.

In order to solve this problem, the present invention proposes a method for preparing a meat-based food comprising the steps defined in the attached independent claim 1.

Preferred ways of carrying out the method according to the invention are the subject of the dependent claims, the content of which is to be understood as an integral and integrating part of the following description.

In summary, the invention is based on the idea of shaping the meat block constituting the food in such a way that it has a central through hole having an axis which substantially coincides with the longitudinal axis of said meat block, and that it also has a plurality of radial and/or transverse cavities which open outwards and are distributed over the entire lateral surface of the meat block to put the inner part, or core, of the meat block, and if possible also said central through hole, in communication with the outside. The central through hole made in the meat block allows all of the water and other liquids that the meat releases during cooking to run off, thereby preventing such liquids from being trapped inside the meat block. Indeed, without such a hole, once the outer layer of the meat block is cooked, and is thus no longer permeable, the liquids can no longer run off to the outside and are therefore trapped inside said meat block, thus lengthening the cooking time and reducing the quality of cooking. With a meat block obtained with the method according to the invention, therefore, to allow all of the liquids to run off it is sufficient to keep the central through hole open during cooking, something which can be easily obtained, for example, using a spit provided with special spreader elements that keep the hole open once the spit has been inserted into said hole. Moreover, thanks to the presence of the radial and/or transverse cavities which open outwards, the heat generated by the fixed heat source used for cooking can more easily penetrate into the core of the meat block, thereby ensuring that the meat block is cooked right the way through in a shorter time than the prior art and without the risk of burning the outermost layer of the meat block.

Further features and advantages of the present invention will be apparent from the detailed description which follows, given purely by way of non-limiting example, with reference to the accompanying drawings, in which:
Figures 1A and 1B are perspective views, from two different angles, of a first example of a meat block obtained with the method of the present invention;
Figures 2A and 2B are perspective views, from two different angles, of a second example of a meat block obtained with the method of the present invention;
Figures 3A and 3B are perspective views, from two different angles, of a third example of a meat block obtained with the method of the present invention;
Figures 4A and 4B are perspective views, from two different angles, of a fourth example of a meat block obtained with the method of the present invention;
Figures 5A and 5B are perspective views, from two different angles, of a fifth example of a meat block obtained with the method of the present invention; and
Figures 6A and 6B are perspective views, from two different angles, of a mould that may be used for the preparation of a meat block according to Figures 1A and 1B.

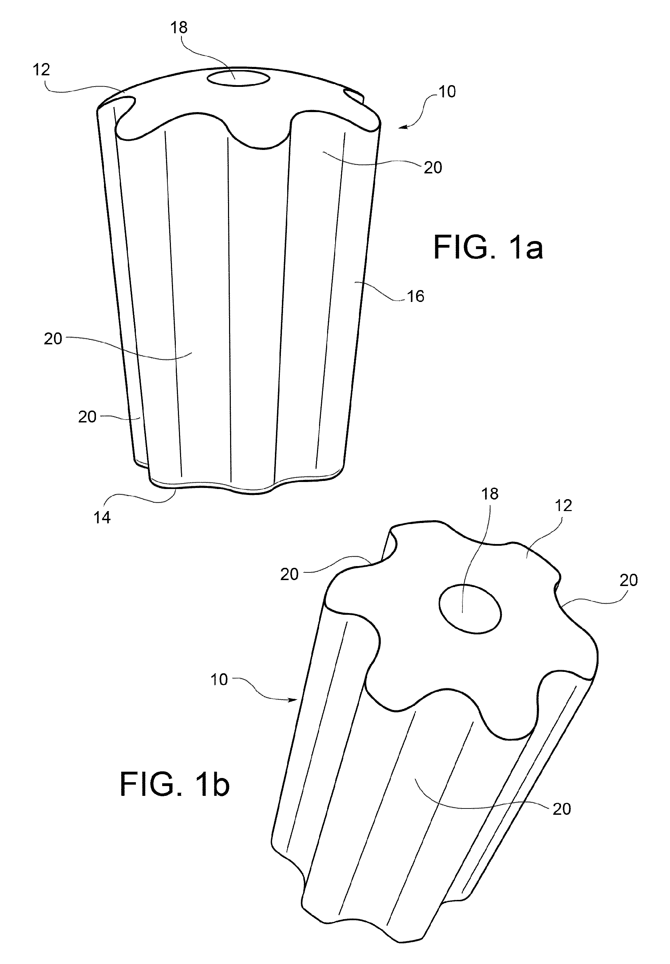

As mentioned above, the meat-based food obtained with the method of the present invention contains mainly meat, in particular beef or turkey, and, in lesser amounts, water, salt, spices and possibly additives, for example transglutaminase (used to keep the shape of the food intact before cooking). These ingredients are compacted to form a block, referred to below for the sake of convenience as meat block, which is suitably shaped in the manner which will be explained in detail below with reference to the embodiments shown in Figures 1A to 5B, in which the meat block is generally indicated 10.

First of all, the meat block 10 has an elongated shape along a longitudinal axis x. The terms "axial" and "axially" will be used below with reference to the direction of the longitudinal axis x. The terms "transverse" and "transversely" will be used below with reference to any direction lying in a plane perpendicular to the longitudinal axis x, and in particular the terms "radial" and "radially" will indicate a transverse direction passing through the longitudinal axis x.

Preferably, the meat block 10 is tapered towards one of the two axial ends thereof, thus having a configuration generally in the shape of a truncated cone, with an upper face 12 (which, according to the orientation of the meat block shown in the figures, corresponds to the face having a greater surface area), a lower face 14 (which, according to the orientation of the meat block shown in the figures, corresponds to the face having a smaller surface area) and a lateral surface 16. Preferably, one of the two faces 12 and 14 of the meat block (in the embodiments shown herein, the upper face 12) has a domed or convex surface, while the other face (in the embodiments shown herein, the lower face 14) has a substantially flat surface.

According to a first aspect of the present invention, the meat block 10 has a central through hole 18, substantially cylindrical in shape, the longitudinal axis of which substantially coincides with the longitudinal axis x of the meat block. The central hole 18 thus passes through the entire meat block 10 from the upper face 12 to the lower face 14. As mentioned previously, the central hole 18 has the function of allowing all of the water and other liquids that the meat releases during cooking to run off, thereby preventing such liquids from being trapped inside the meat block 10.

According to a further aspect of the present invention, the meat block 10 also has a plurality of radial and/or transverse cavities 20 which open outwards and are distributed over the entire lateral surface 16 to put the inner part, or core, of the meat block 10, and if possible also the central hole 18, in communication with the outside. Owing to said cavities 20, the lateral surface 16 of the meat block 10 is not uniform in appearance, but has a succession (in the axial and/or circumferential direction) of solid parts and hollow parts such that portions of the lateral surface 16 located at a greater distance from the longitudinal axis x are interposed between portions of the lateral surface 16 located at a lesser distance from the longitudinal axis x. In other words, when the meat block 10 is cut through a transverse section plane (i.e. through a section plane perpendicular to the longitudinal axis x) and through an axial section plane (i.e. through a section plane passing through the longitudinal axis x), at least one of the following two conditions is met: a) the cross-sectional profile of the meat block 10 has external contours alternating with internal contours, said external and internal contours extending respectively outside and inside with respect to a circumference lying between an inner circumference and an outer circumference delimiting said profile; and b) the cross-sectional profile of the meat block 10 has external contours alternating with internal contours, said external and internal contours extending respectively outside and inside with respect to a line lying between the inner straight line and the outer straight line delimiting said profile. As stated above, these cavities allow the heat generated by the fixed heat source used for cooking to more easily penetrate into the core of the meat block 10, thereby ensuring said block is cooked right the way through in a shorter time than the prior art and without the risk of burning the outermost layer of the meat block.

According to the embodiment shown in Figures 1A and 1B, the lateral surface 16 of the meat block 10 has a multi-lobe shape in transverse section. In this case, the cavities 20 are formed by straight grooves that extend along the whole length of the meat block 10.

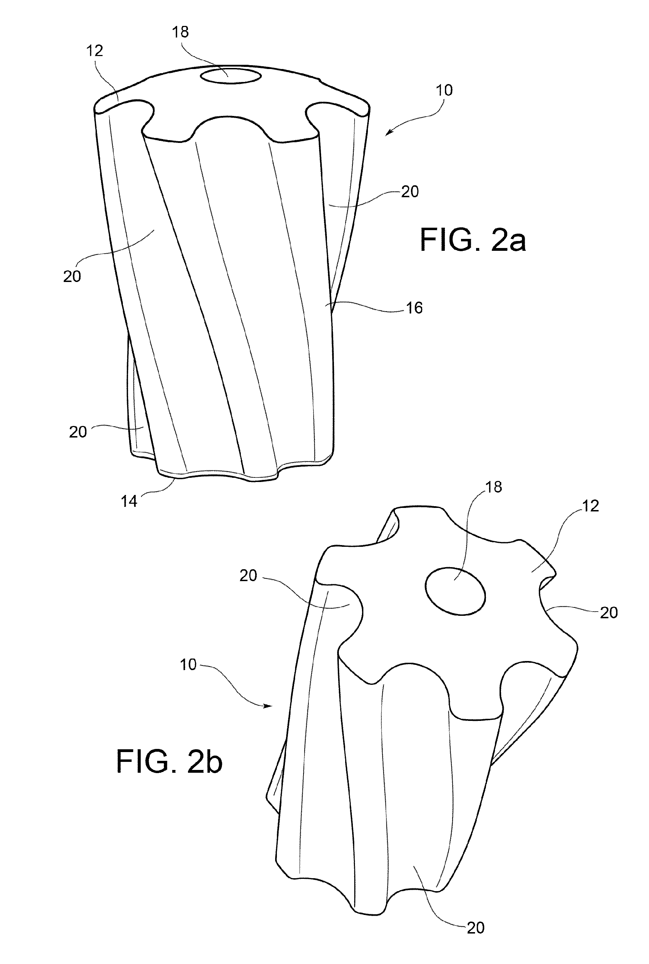

The embodiment shown in Figures 2A and 2B is similar to that of Figures 1A and 1B, with the difference that in this case the cavities 20 are formed by helical grooves rather than straight grooves.

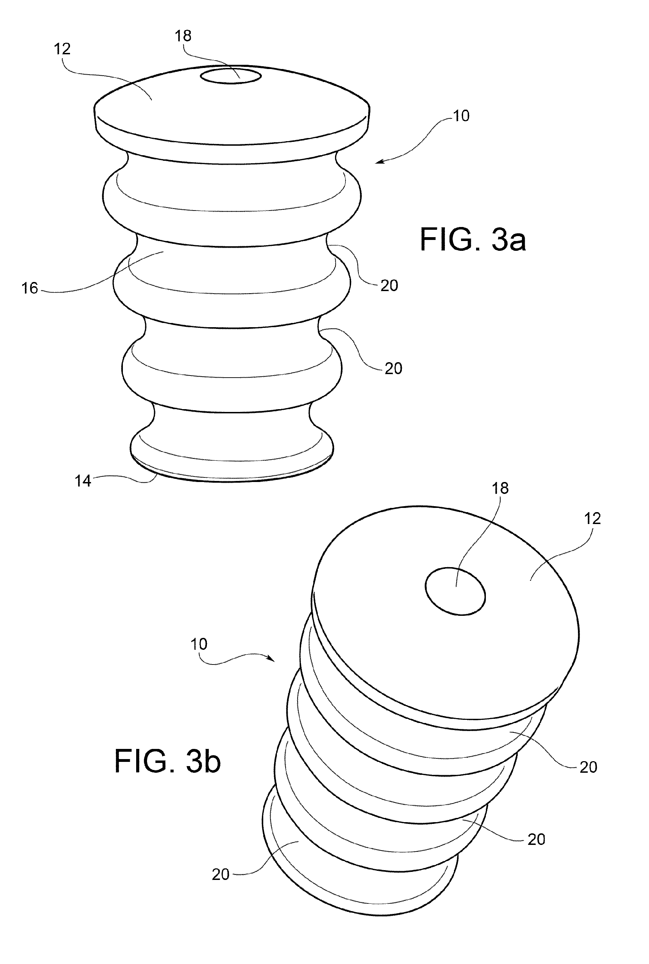

According to the embodiment shown in Figures 3A and 3B, the cavities 20 are formed by circumferential grooves oriented perpendicular to the longitudinal axis x. In this case, therefore, the meat block 10 has an undulating profile in axial section, while the profile in transverse section is circular (the diameter varying according to the position of the section plane along the longitudinal axis x).

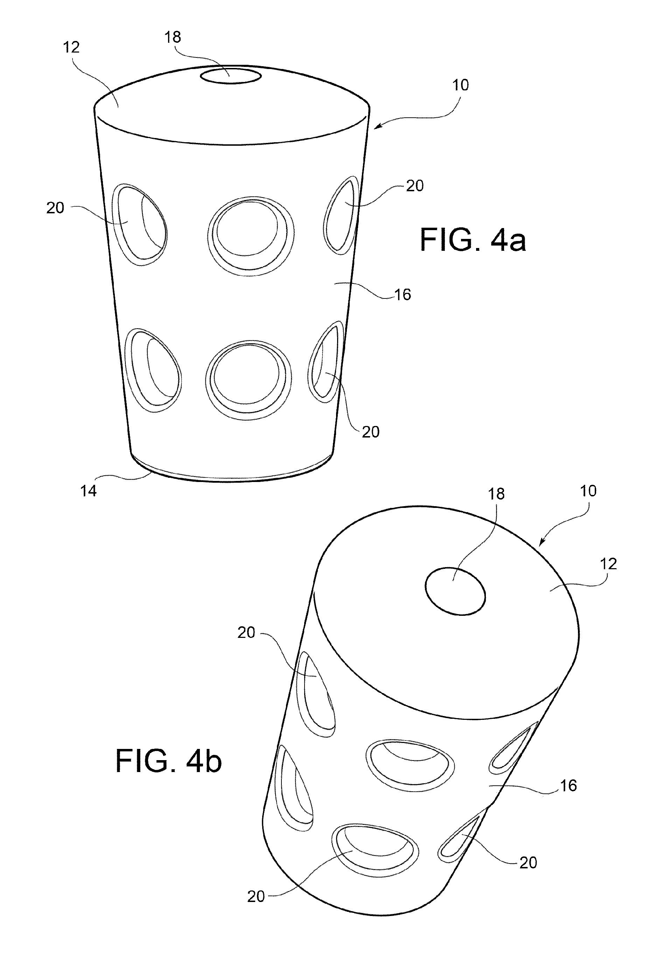

According to the embodiment shown in Figures 4A and 4B, the cavities 20 are formed by radial blind holes. Preferably, these holes are distributed in several rows axially spaced apart from one another. Preferably, the holes in each row of holes are angularly equidistant from one another. Preferably, the holes are all of the same diameter. In any case, the holes may also be of different sizes and/or distributed in a more or less orderly manner on the lateral surface of the meat block 10.

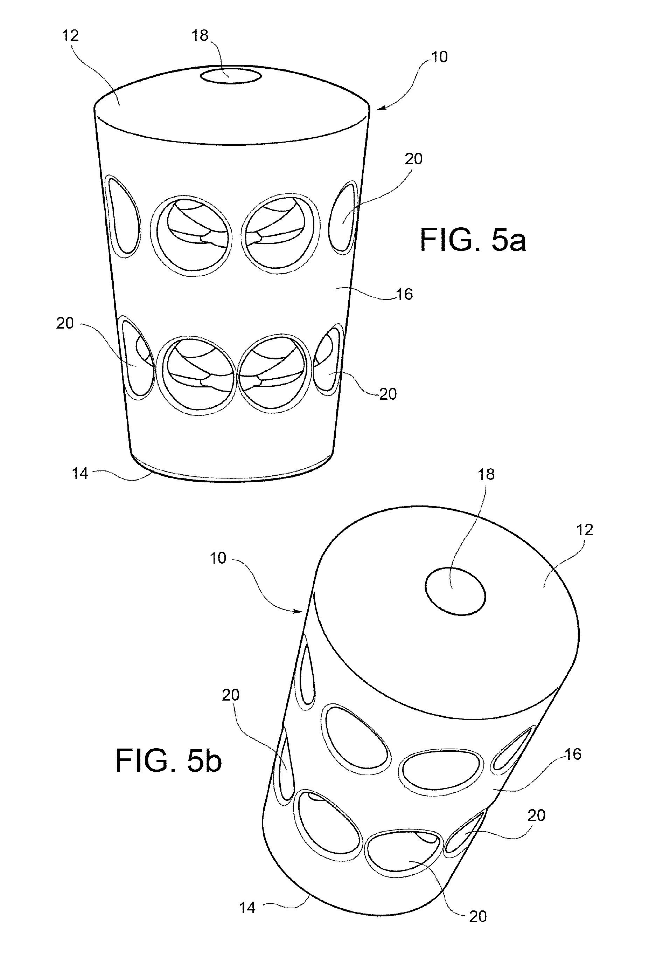

Lastly, the embodiment shown in Figures 5A and 5B is similar to that of Figures 4A and 4B, with the difference that in this case the cavities 20 are formed by through holes rather than blind holes.

The method for preparing a meat block like that described above with reference to Figures 1A to 5B is as follows.

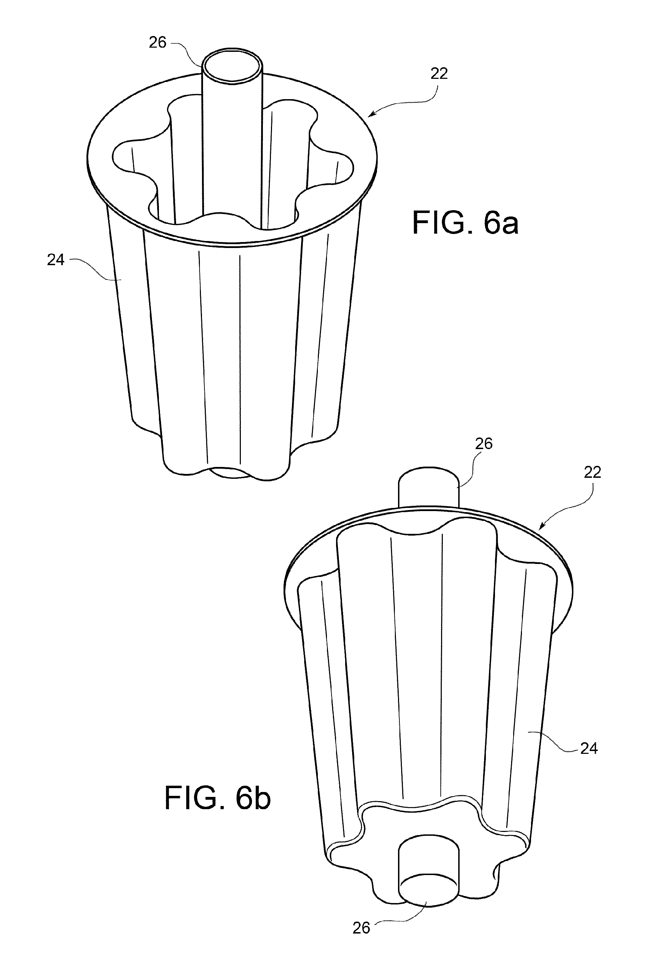

First, the meat to be used for the preparation of the food (for example, beef or turkey) is sliced into very thin slices and mixed for a certain time (for example, about 40 minutes) with water, salt, spices and possibly additives (such as the aforementioned transglutaminase). The mixture thus obtained is left to rest at low temperature (for example, at about 0°C) for a certain time (for example, about one hour). The mixture is then passed through a perforated tube by means of a worm screw in order to facilitate the drainage of water and other excess liquids. The mixture is then pushed by another worm screw into a mould 22 (Figures 6A and 6B), preferably made of plastic. As shown in Figures 6A and 6B, the mould 22 includes an outer casing 24, closed at the bottom and laterally, and an inner tube 26 of cylindrical shape, arranged coaxially to the outer casing 24. The lateral surface of the outer casing 24 is suitably shaped so as to impart the desired shape to the meat block, in this case the shape shown in Figures 1A and 1B. The inner tube 26, instead, has the function of producing the central hole 18 in the meat block. The operation of filling the mould 22 is preferably performed with the mould positioned vertically (as shown in Figures 6A and 6B), the mould being tapped gently to ensure adequate compaction of the mixture in the mould. The mould 22 with the meat block formed therein is then vacuum-packed in a hermetically sealed bag and is thus ready to be sold (fresh or frozen).

Naturally, the principle of the invention remaining unchanged, the embodiments and constructional details may vary widely with respect to those described and illustrated purely by way of non-limiting example, without thereby departing from the scope of the invention as defined in the appended claims.

## Claims

1. Method for preparing a meat-based food comprising the steps of:
a) providing a mixture containing meat along with at least one ingredient chosen from water, salt and spices; and
b) introducing said mixture into a mould (22) suitably shaped so as to obtain a meat block (10) of elongated shape along a longitudinal axis (x), with axially opposite first and second faces (12, 14) and with a lateral surface (16), wherein the meat block (10) has a central through hole (18), the axis of which coincides with said longitudinal axis (x), and a plurality of radial and/or transverse cavities (20), which open outwards and are distributed over the entire lateral surface (16) to put the inner part of the meat block (10) into communication with the outside.

2. Method according to claim 1, wherein at step b) the meat block (10) is shaped so as to be tapered towards one (14) of said first and second faces (12, 14).

3. Method according to claim 1 or claim 2, wherein at step b) the meat block (10) is shaped so as to have, as radial and/or transverse cavities (20), a plurality of straight grooves which extend over the entire length of the meat block (10).

4. Method according to claim 1 or claim 2, wherein at step b) the meat block (10) is shaped so as to have, as radial and/or transverse cavities (20), a plurality of helical grooves which extend over the entire length of the meat block (10).

5. Method according to claim 1 or claim 2, wherein at step b) the meat block (10) is shaped so as to have, as radial and/or transverse cavities (20), a plurality of circumferential grooves oriented perpendicular to the longitudinal axis (x).

6. Method according to claim 1 or claim 2, wherein at step b) the meat block (10) is shaped so as to have, as radial and/or transverse cavities (20), a plurality of blind radial holes.

7. Method according to claim 1 or claim 2, wherein at step b) the meat block (10) is shaped so as to have, as radial and/or transverse cavities (20), a plurality of radial through holes.
